# EUROPEAN PATENT APPLICATION

(11) **EP 4 357 935 A1**
(43) Date of publication of application: **24.04.2024**
(21) Application number: 22845133.2
(22) Date of filing: 04.07.2022
(51) Int. Cl.: G06F 16/29, G06T 11/20

(54) **MAP, AND MAP GENERATION METHOD AND APPARATUS**

(30) Priority: 21.07.2021 CN 202110825100
(71) Applicant: Huawei Technologies Co., Ltd., Longgang Shenzhen, Guangdong 518129 (CN)
(72) Inventor: FEI, Wenkai, Shenzhen, Guangdong 518129 (CN); LIU, Jianqin, Shenzhen, Guangdong 518129 (CN); WU, Yong, Shenzhen, Guangdong 518129 (CN)
(74) Representative: Grünecker Patent- und Rechtsanwälte PartG mbB
(86) International application number: PCT/CN2022/103710
(87) International publication number: WO 2023/000968

(57) **Abstract**

This application discloses a map and a map generation method and apparatus. The method includes: generating first information, where the first information indicates that a first event in a first tile is associated with a second tile, the first event is a dynamic event in a map, and the first tile and the second tile are two different tiles in the map; and storing the first information. Through implementation of this application, quick indexing of an event in a map and quick indexing of a map tile associated with the event can be implemented.

## Description

This application claims priority to Chinese Patent Application No. 202110825100.8, filed with the China National Intellectual Property Administration on July 21, 2021 and entitled "MAP AND MAP GENERATION METHOD AND APPARATUS", which is incorporated herein by reference in its entirety.

### TECHNICAL FIELD

This application relates to the intelligent driving field and the map field, and in particular, to a map and a map generation method and apparatus.

### BACKGROUND

A map may assist a vehicle in autonomous driving. The map includes static information and dynamic information. The static information includes road network structure data (for example, a lane and a road), road traffic facility data (for example, a traffic identifier and a roadside facility), and the like. The dynamic information mainly includes temporary dynamic events that can change with time, for example, a traffic accident event, a traffic congestion event, and a road freezing event, and the dynamic events are associated. For example, the traffic accident event may increase a congestion degree of the traffic congestion event. For another example, congestion of a road A may cause congestion of a road B connected to the road A.

Because the dynamic events change with time frequently, the dynamic information in the map needs to be updated in real time. However, because an amount of data in the map is large, a high update frequency causes high load on a network transmission speed and network traffic.

### SUMMARY

This application discloses a map and a map generation method and apparatus, to implement quick indexing of an event in a map and quick indexing of a map tile associated with the event.

According to a first aspect, this application provides a map generation method. The method includes: generating first information, where the first information indicates that a first event in a first tile is associated with a second tile, the first event is a dynamic event in a map, and the first tile and the second tile are two different tiles in the map; and storing the first information.

The tile may be understood as follows: A map within a specific range is sliced into several rows and columns of rectangular raster images based on a specific size and format and a different map resolution, and the rectangular raster images obtained after slicing are referred to as tiles (Tile). In addition, a higher map resolution indicates a larger quantity of slicing times, a larger quantity of tiles that form the map, and a higher tile level. When a slicing manner is cross slicing, a tile of a specific level is formed by four corresponding tiles of a level one level higher than the specific level.

According to the foregoing method, map information that includes an association relationship between an event in a map and another tile in the map is generated, and the event in the map and the tile associated with the event in the map can be quickly located based on the map information. This helps quickly respond to a change of the event, improve update efficiency of the map, and improve accuracy of driving decision-making.

Optionally, that a first event is associated with a second tile is: a change of the first event affects a dynamic event in the second tile; geographic coverage of the second tile includes geographic coverage of the first tile; or geographic coverage of the first tile includes geographic coverage of the second tile.

Through implementation of the foregoing implementation, sizes of geographic coverage of associated tiles may be the same or may be different. Therefore, an identifier of a map tile in which an event is located may be uniquely determined based on a size of a geographic range of the event. This effectively simplifies a storage structure of related information of the event, and saves storage space.

For example, a geographic range of a weather-type event is usually greater than a geographic range of a traffic accident event. Therefore, a size of geographic coverage of a tile in which the weather-type event is located is usually greater than a size of geographic coverage of a tile in which the traffic accident event is located.

Optionally, when the geographic coverage of the first tile includes the geographic coverage of the second tile, the first tile may be referred to as a parent tile of the second tile, and the second tile may be referred to as a child tile of the first tile.

Optionally, the first tile and the second tile are tiles of a same level. In other words, a size of the geographic coverage of the first tile is the same as a size of the geographic coverage of the second tile.

Optionally, the storing the first information is specifically: storing the first information in a data structure that is in the map and that is used to describe the first tile.

Optionally, the storing the first information is specifically: storing the first information in a data structure in which an identifier of the first tile and an identifier of the second tile are used as associated indexes.

Optionally, the first information includes information indicating an identifier of the first event, and information indicating the identifier of the second tile.

Optionally, the first information further includes information indicating an identifier of a second event in the second tile, and the second event is affected by the change of the first event.

That the second event is affected by the change of the first event may be: the first event is a cause for occurrence of the second event, the first event increases or decreases a degree of the second event, the first event and the second event occur concomitantly, or the like.

Optionally, the method further includes: obtaining second information, where the second information indicates a current status of the first event; determining, based on the second information, that the first event changes; determining, based on the first information, that first description information of the second event in the map needs to be updated; and updating the first description information based on the second information.

Through implementation of the foregoing implementation, when it is detected that an event in a tile changes, quick indexing of an event that is in a cross-area tile and under associated impact can be implemented based on first information. This improves event search efficiency and inter-event associated update efficiency.

Optionally, the method further includes: obtaining third information, where the third information indicates the current status of the first event; determining, based on the third information, that the first event changes; determining, based on the first information, that second description information of the second tile in the map needs to be updated; and updating the second description information based on the third information.

Through implementation of the foregoing implementation, when it is detected that an event in a tile changes, an identifier of a tile associated with the event can be quickly indexed based on first information. This improves tile update efficiency in a map.

Optionally, the determining that the first event changes is specifically: determining that the first event disappears; determining that the first event is a newly added event; or determining that a change degree of the first event is greater than a threshold.

Optionally, the change degree of the first event is a change value of a geographic range of the first event at a current moment relative to a geographic range of the first event at a historical moment and/or a change value of attribute data of the first event at the current moment relative to attribute data of the first event at the historical moment.

Optionally, the method further includes updating the first information in the following case: the first event disappears; the first event changes; or the change degree of the first event is greater than the preset threshold.

Through implementation of the foregoing manner, when it is detected that the first event meets any one of the foregoing cases: the event disappears, the event changes, and the change degree of the event is greater than the preset threshold, the first information may be updated to implement an associated update on an event associated with the event and an associated update on a tile associated with the event. This improves update efficiency.

According to a second aspect, this application provides a map generation apparatus. The apparatus includes: a generation unit, configured to generate first information, where the first information indicates that a first event in a first tile is associated with a second tile, the first event is a dynamic event in a map, and the first tile and the second tile are two different tiles in the map; and a storage unit, configured to store the first information.

Optionally, that a first event is associated with a second tile is: a change of the first event affects a dynamic event in the second tile; geographic coverage of the second tile includes geographic coverage of the first tile; or geographic coverage of the first tile includes geographic coverage of the second tile.

Optionally, the first information includes information indicating an identifier of the first event, and information indicating an identifier of the second tile.

Optionally, the first information further includes information indicating an identifier of a second event in the second tile, and the second event is affected by the change of the first event.

Optionally, the apparatus further includes: an obtaining unit, configured to obtain second information, where the second information indicates a current status of the first event; a determining unit, configured to determine, based on the second information, that the first event changes, where the determining unit is further configured to determine, based on the first information, that first description information of the second event in the map needs to be updated; and an update unit, configured to update the first description information based on the second information.

Optionally, the apparatus further includes: the obtaining unit, configured to obtain third information, where the third information indicates the current status of the first event; the determining unit, configured to determine, based on the third information, that the first event changes, where the determining unit is further configured to determine, based on the first information, that second description information of the second tile in the map needs to be updated; and the update unit, configured to update the second description information based on the third information.

Optionally, the update unit is further configured to update the first information in the following case: the first event disappears; the first event changes; or a change degree of the first event is greater than a preset threshold.

Optionally, the change degree of the first event is a change value of a geographic range of the first event at a current moment relative to a geographic range of the first event at a historical moment and/or a change value of attribute data of the first event at the current moment relative to attribute data of the first event at the historical moment.

Optionally, the storing the first information is specifically: storing the first information in a data structure that is in the map and that is used to describe the first tile.

Optionally, the storing the first information is specifically: storing the first information in a data structure in which an identifier of the first tile and the identifier of the second tile are used as associated indexes.

According to a third aspect, this application provides a map. The map includes map information, the map information indicates that a first event in a first tile is associated with a second tile, the first event is a dynamic event in the map, and the first tile and the second tile are two different tiles in the map.

Optionally, that a first event is associated with a second tile is: a change of the first event affects a dynamic event in the second tile; geographic coverage of the second tile includes geographic coverage of the first tile; or geographic coverage of the first tile includes geographic coverage of the second tile.

Optionally, the map information further includes information indicating an identifier of the first event, and information indicating an identifier of the second tile.

Optionally, the map information further includes information indicating an identifier of a second event in the second tile, and the second event is affected by the change of the first event.

According to a fourth aspect, this application provides a map generation apparatus. The apparatus includes a processor and a memory. The memory is configured to store program instructions, and the processor invokes the program instructions in the memory to perform the method according to any one of the first aspect or the possible implementations of the first aspect. Usually, a map is generated by a server. In this case, the map generation apparatus may be a map server, or may be a component or a chip in the map server. In addition, the map may alternatively be generated by a roadside device, a vehicle, or a mobile terminal. In this case, the map generation apparatus may alternatively be the roadside device, the vehicle, or the mobile terminal, or a component or a chip in the roadside device, the vehicle, or the mobile terminal.

According to a fifth aspect, this application provides a computer-readable storage medium. The computer-readable storage medium stores program code executed by an apparatus, and the program code includes instructions used to perform the method according to any one of the first aspect or the possible implementations of the first aspect.

According to a sixth aspect, this application provides a computer-readable storage medium. The computer-readable storage medium is configured to store a map. The map includes map information, the map information indicates that a first event in a first tile is associated with a second tile, the first event is a dynamic event in the map, and the first tile and the second tile are two different tiles in the map.

According to a seventh aspect, this application provides a computer program product. When the computer program product is executed by a processor, the method according to any one of the first aspect or the possible embodiments of the first aspect is implemented. The computer program product may be, for example, a software installation package. When the method provided in any possible design of the first aspect needs to be used, the computer program product may be downloaded and executed on the processor, to implement the method according to any one of the first aspect or the possible embodiments of the first aspect.

### BRIEF DESCRIPTION OF DRAWINGS

FIG. 1 is a schematic diagram of a system architecture according to an embodiment of this application;
FIG. 2A is a schematic diagram of event description information according to an embodiment of this application;
FIG. 2B is a schematic diagram of other event description information according to an embodiment of this application;
FIG. 3 is a framework diagram of cross-tile event management according to an embodiment of this application;
FIG. 4 is a schematic diagram of a tree representation of inter-tile association information according to an embodiment of this application;
FIG. 5 is a schematic diagram of a parameter matrix of inter-tile association information according to an embodiment of this application;
FIG. 6 is a schematic diagram of inter-tile association information according to an embodiment of this application;
FIG. 7 is a flowchart of a map update method according to an embodiment of this application;
FIG. 8 is a schematic diagram of an application scenario according to an embodiment of this application;
FIG. 9 is a flowchart of another map update method according to an embodiment of this application;
FIG. 10 is a schematic diagram of a map generation method according to an embodiment of this application;
FIG. 11 is a schematic diagram of a function structure of an apparatus according to an embodiment of this application; and
FIG. 12 is a schematic diagram of a structure of another computing device according to an embodiment of this application.

### DESCRIPTION OF EMBODIMENTS

Terms used in embodiments of this application are merely for the purpose of describing specific embodiments, but are not intended to limit this application. In the specification and claims in embodiments of this application, terms "first", "second", and the like are intended to distinguish between different described objects, and are not intended to limit a sequence of a plurality of described objects, or limit a quantity of described objects, or distinguish between different entity objects. For example, "first information" is not necessarily prior to "second information". The "first information" may be one piece of information, or may be a plurality of pieces of information. In practice, the "first information" and the "second information" may be same information.

A map includes static information and dynamic information. The static information is usually fixed and changed slightly, and has a long update periodicity. The dynamic information is usually changed rapidly in terms of a status, and has a high update frequency.

The static information may specifically include road network structure data, road traffic facility data (for example, a traffic identifier and a roadside facility), and the like. The road network structure data may be classified into area-level data, road-level data, and lane-level data. Each area has a unique area ID. The area ID may also be referred to as a geographic area ID, and is usually referred to as a tile ID. Each area includes a plurality of roads, and each road has a unique road ID. Each road also includes a plurality of lanes, and each lane has a unique lane ID. In addition, there are road topology connection relationships between areas, between roads, and between lanes. It should be noted that the area, the road, and the lane may be referred to as map elements in a high-precision map.

The dynamic information specifically includes temporary dynamic events, for example, a road construction event, a road maintenance event, a blizzard cold event, a rainstorm event, a traffic accident event, a traffic congestion event, a temporary speed limiting event, a lane topology event, and a road surface freezing event. In addition, some dynamic events are associated with each other. For example, a road surface freezing event at a specific location causes occurrence of a traffic accident event at the location, and a traffic accident event at a specific location increases a congestion degree of a traffic congestion event at the location.

When the dynamic event changes, synchronization and an update need to be performed in the map in a timely manner, to ensure accuracy of information provided by the map. In addition, because a status of the dynamic event changes rapidly, the dynamic information in the map needs to be updated in real time. However, a large amount of data exists in the map, and a high update frequency increases network transmission load and network traffic consumption.

To resolve the foregoing problem, embodiments of this application provide a map generation method. In a map, a map tile associated with an event is determined based on an association relationship between events. Therefore, when a changed event is detected, an update on a corresponding tile in the map and an associated update on another event associated with the changed event in the tile can be quickly implemented based on a map tile associated with the event. This effectively reduces network transmission pressure, and further improves dynamic event update efficiency in the map, so that dynamic information provided by the map is accurate and reliable.

The following describes technical solutions of this application with reference to accompanying drawings.

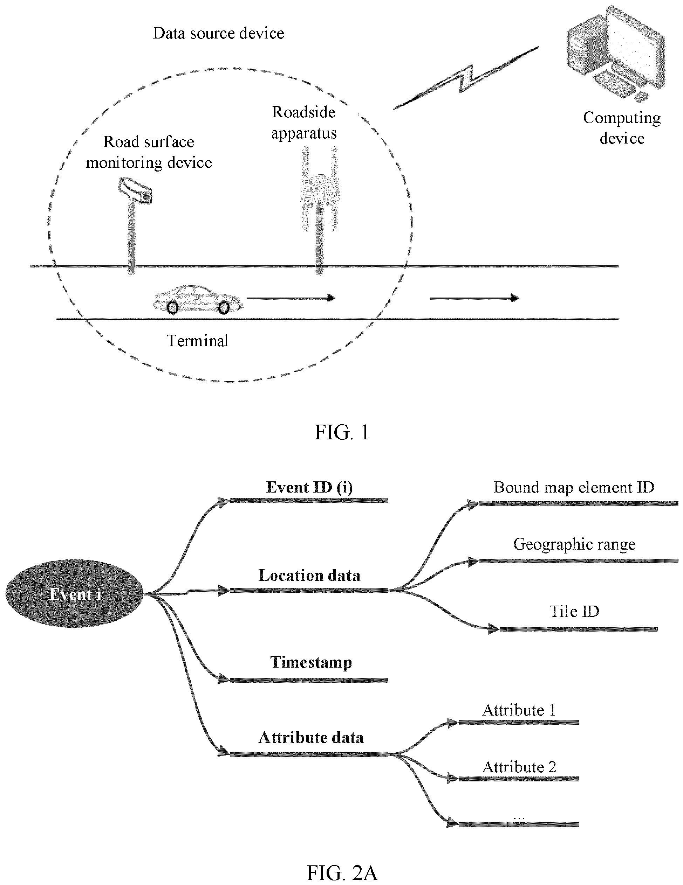

FIG. 1 is a diagram of a system architecture. A system is used to generate a map, where the map includes tile-event index information, and the tile-event index information indicates a mapping relationship between an event in the map and a tile in the map. In some possible embodiments, the map further includes description information of each event in the map and an association relationship between events. As shown in FIG. 1, the system includes at least a data source device and a computing device, where the data source device and the computing device may be connected and communicate in a wireless manner.

The data source device is configured to provide basic data including an event for the computing device. Based on the basic data of the event, the computing device obtains a tile in which the event is located and determines a tile in which another event associated with the event is located, to generate tile index information. In some possible embodiments, the computing device may further obtain event basic information based on the basic data, where the event basic information is used to describe a status of each event in the map. In some possible embodiments, when detecting, based on real-time data provided by the data source device, that an event changes, the computing device may update, based on a current status of the event, description information of an event affected by the event and related information of a tile associated with the event. It should be noted that the map may be a high-precision map or another type of map including an area, a road, and a lane. This is not specifically limited in embodiments of this application.

The data source device includes but is not limited to a terminal, a road surface monitoring apparatus, a roadside apparatus, and the like. The roadside apparatus is configured to obtain road information, traffic road condition information, and the like in a wide geographic range, and may include an apparatus such as a roadside unit (Road Side Unit, RSU), a multi-access edge computing (Multi-Access Edge Computing, MEC), or a sensor. For example, the roadside apparatus may be the RSU, the MEC, or the sensor, a system including the RSU and the MEC, a system including the RSU and the sensor, or a system including the RSU, the MEC, and the sensor. The road surface monitoring apparatus may be configured to collect road information and road surface traffic information, and may be a camera, a road surface gathered water detector, a lidar, a millimeter-wave radar, or the like. The terminal may obtain information such as a road and a traffic road condition through a sensor of the terminal, and may be a vehicle, an on board unit (On Board Unit, OBU), an intelligent wearable device (for example, a sports band or a watch), a portable mobile device (for example, a mobile phone or a tablet), or another sensor or device, such as a component or a chip of the portable mobile device, that can communicate with the computing device. This is not specifically limited in embodiments of this application. In some possible embodiments, the data source device may alternatively be a device that provides traffic road condition data by a traffic management department, or the like.

The map may be generated by the computing device. The computing device may be a device having a computing function, for example, a computer, a server, a component or a chip in the server, or a multi-access edge computing (Multi-Access Edge Computing, MEC). It should be noted that the computing device may be deployed in a cloud environment, or may be deployed in an edge environment. This is not specifically limited in embodiments of this application. In some possible embodiments, the map may be generated by a roadside device, a vehicle, or a component or a chip in a mobile terminal.

It should be noted that the communication system shown in FIG. 1 may be a 3rd generation partnership project (3rd Generation Partnership Project, 3GPP) communication system, for example, a long term evolution (Long Term Evolution, LTE) system, or may be a 5th generation (5th Generation, 5G) mobile communication system or a new radio (New Radio, NR) system, or may be a non-3GPP communication system. This is not specifically limited in this application.

It should be noted that FIG. 1 is merely an example diagram of the architecture, and a quantity of network elements included in the communication system shown in FIG. 1 is not limited. Although not shown in FIG. 1, in addition to the functional entities shown in FIG. 1, FIG. 1 may further include another functional entity. In addition, a method provided in embodiments of this application may be applied to the communication system shown in FIG. 1. Certainly, the method provided in embodiments of this application may alternatively be applied to another communication system. This is not limited in embodiments of this application.

In embodiments of this application, an event is an event that temporarily occurs, lasts for specific duration, and affects driving decision-making. In addition, the event further has a feature that a status of the event dynamically changes with time. For example, the event may be a traffic accident event, a traffic congestion event, a road maintenance event, a road surface freezing event, a road surface collapse event, a traffic prohibition event, a temporary speed limiting event, a temporary lane topology connection event, a blizzard cold event, or a rainstorm event.

Specifically, event basic information includes description information of a plurality of events in a map, and description information of each event may be represented in a form shown in FIG. 2A. An event i is any event in the map, and description information of the event i includes an event identifier ID (namely, an event ID i of the event i), location data, a timestamp, attribute data, and the like of the event. The event ID uniquely indicates the event. The location data of the event indicates a location of the event in the map, and specifically includes an ID of a tile in which the event is located, a bound map element ID, and a geographic range of the event. The timestamp of the event is an occurrence moment of the event. The attribute data of the event indicates a feature of the event. It should be noted that FIG. 2A shows only an example of indicating a status of the event i at a specific timestamp.

In embodiments of this application, different events have different attributes. For example, attributes of the road surface freezing event include an ice thickness, an ice surface friction coefficient, and the like; attributes of the traffic accident event include an accident type, a motion status parameter of a vehicle when an accident occurs, a model of the vehicle involved in the accident, and the like; attributes of the rainstorm event include a rainfall amount, a warning level, a wind speed, a wind direction, and the like; attributes of the traffic congestion event include a congestion length, a congestion time period type, a congestion degree, and the like. This is not specifically limited in embodiments of this application.

In embodiments of this application, the geographic range of the event is represented in different manners. In a specific implementation, when the geographic range of the event is represented as a regular shape, the geographic range may be represented by using two parameters relative to a reference point (for example, a start point of a lane or a road). For example, (120 m, 140 m) represents starting from a location 120 meters away from the reference point and ending at a location 140 meters away from the reference point. Alternatively, the geographic range may be represented by using geographic coordinates of two endpoints. In another specific implementation, when the geographic range of the event is represented as an irregular shape, the geographic range may be represented by using geographic coordinates of a plurality of corner points of the irregular shape.

In embodiments of this application, the map element ID bound to the event may be a lane ID, a road ID, or the like. It should be noted that a quantity of map element IDs bound to the event is not specifically limited in embodiments of this application, and the quantity of map element IDs bound to the event is related to the geographic range occupied by the event.

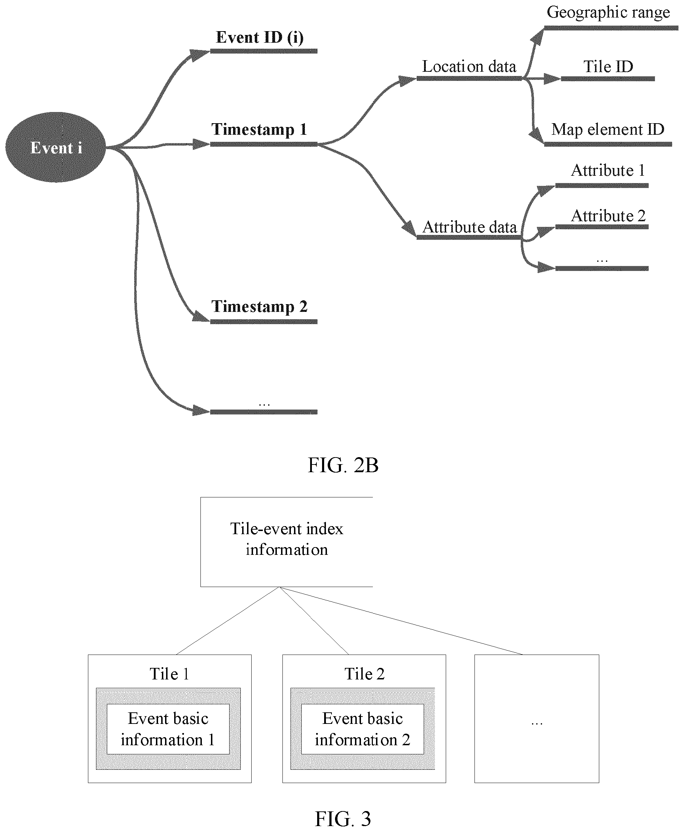

In a specific implementation, because the event dynamically changes, the description information of the event may alternatively indicate statuses of the event in a plurality of timestamps, and the plurality of timestamps are stored according to a sequence of the timestamps. Refer to FIG. 2B. The description information of the event i may alternatively be represented in a form shown in FIG. 2B. To be specific, the description information of the event i includes an event ID of the event i, and location data and attribute data of the event i at at least one historical moment (for example, a timestamp 1 and a timestamp 2). For example, it can be learned from FIG. 2B that location data of the event i in the timestamp 1 includes a geographic range, a tile ID, and a map element ID, and attribute data of the event i in the timestamp 1 includes an attribute 1 and an attribute 2.

It may be understood that an event ID of a same event remains unchanged in different timestamps, but the same event may have different statuses in different timestamps. For example, as time goes on, at least one of location data and attribute data of the event changes.

In embodiments of this application, the description information of each event in the map may be stored based on a time period as required, for example, at a periodicity of one day or one hour, to facilitate locating and searching of the description information of the event.

In embodiments of this application, the description information of each event in the map may be stored based on a tile in the map. For example, a tile in the map is used as a unit, and a storage structure corresponding to each tile stores only description information of an event in the tile. This facilitates data management and selective data loading. For example, in a driving process, a vehicle may be assisted in preferentially loading data in a tile in which the vehicle is located and data in a tile in which a planned route of the vehicle is located, to improve a loading speed and a querying speed of event-related data in the map.

The tile may be understood as follows: A map within a specific range is sliced into several rows and columns of rectangular raster images based on a specific size and format and a different map resolution, and the rectangular raster images obtained after slicing are referred to as tiles (Tile). In addition, a higher map resolution indicates a larger quantity of slicing times, a larger quantity of tiles that form the map, and a higher tile level. When a slicing manner is cross slicing, a tile of a specific level is formed by four corresponding tiles of a level one level higher than the specific level.

For example, a tile 1 is a tile of a specific level in the map, and cross slicing is performed on the tile 1 to further generate four tiles of a level one level higher than the level of tile 1. The four tiles are separately identified as 1-00, 1-01, 1-10, and 1-11. It may be understood that geographic coverage of the tile 1 includes geographic coverage of the tile 1-00, geographic coverage of the tile 1-01, geographic coverage of the tile 1-10, and geographic coverage of the tile 1-11.

To improve an indexing speed of each event in the map and tile update efficiency of the map, an embodiment of this application provides a schematic diagram of a cross-tile management framework. Refer to FIG. 3. Tile-event index information is added in FIG. 3. The tile-event index information indicates an association relationship between an event in a map and a tile in the map. When any event in each tile changes, a tile associated with the event may be quickly located based on the tile-event index information.

Each tile shown in FIG. 3 stores event basic information corresponding to the tile. For example, a tile 1 stores event basic information 1, and a tile 2 stores event basic information 2. The tile 1 is used as an example. In the tile 1, the event basic information 1 includes description information of each event that occurs in the tile 1, and the description information of each event may be represented in the form shown in FIG. 2A or FIG. 2B.

The tile-event index information may be represented in a tree structure manner, or may be represented in a parameter matrix manner. The following specifically describes the two representation forms of the tile-event index information.

### First form: tree structure

Specifically, a tile is used as a unit, and tile association information of each event in the tile is generated. An event 1 in the tile 1 is used as an example, and tile association information of the event 1 indicates that the event 1 in the tile 1 is associated with a target tile in the map. The tile association information of the event 1 is stored in a data structure used to describe the tile 1.

In this embodiment of this application, that the event 1 in the tile 1 is associated with the target tile in the map includes any one of the following: A change of the event 1 affects an event in the target tile, in other words, at least one event in the target tile is affected by the event 1; geographic coverage of the tile 1 includes geographic coverage of the target tile; geographic coverage of the target tile includes geographic coverage of the tile 1.

It should be noted that, when the geographic coverage of the tile 1 includes the geographic coverage of the target tile, the tile 1 may be referred to as a parent tile of the target tile, and the target tile may be referred to as a child tile of the tile 1.

In this embodiment of this application, when the change of the event 1 in the tile 1 affects the event in the target tile, a size of the geographic coverage of the tile 1 may also be equal to a size of the geographic coverage of the target tile. In this case, it indicates that the tile 1 and the target tile are tiles of a same level.

In this embodiment of this application, the tile association information of the event 1 further includes information indicating an identifier of a target event in the target tile, and the target event is affected by the change of the first event.

In this embodiment of this application, that the target event is affected by the change of the first event means that when the first event changes, the first event causes the target event to change, for example, causes a geographic range or attribute data of the target event to change. In other words, the first event is associated with the target event. Specifically, the first event and the target event may have a causal correlation, a time correlation, a space correlation, or the like. This is not specifically limited in this embodiment of this application. It should be noted that, before the tile association information of the event 1 is generated, it has been determined, based on description information of the first event and description information of the target event, that the first event is associated with the target event.

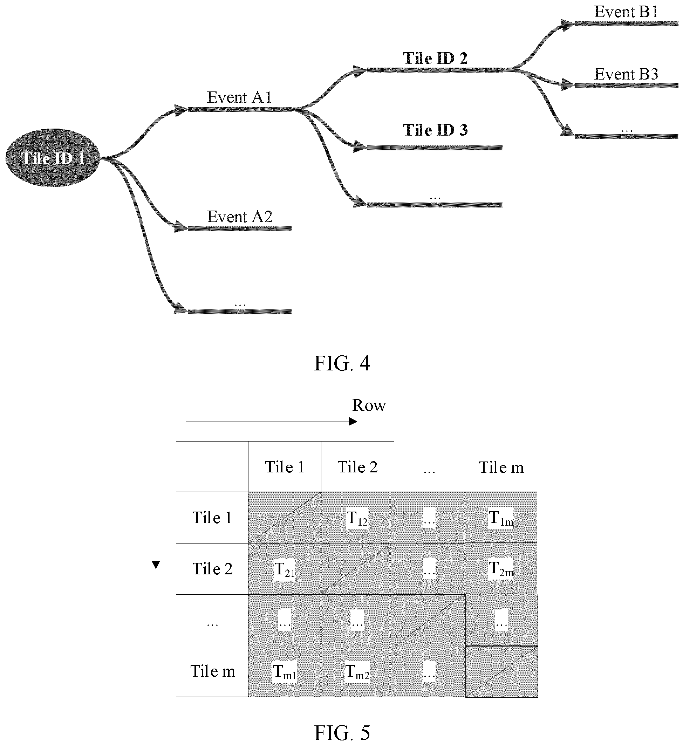

FIG. 4 is a schematic diagram of a data representation of a single tile according to an embodiment of this application. As shown in FIG. 4, a tile ID 1 is used as an example. Data shown in FIG. 4 specifically includes: a tile ID, namely, the tile ID 1; events that are in the tile and that has associated impact on another tile, for example, an event A1 and an event A2, where a quantity of events that are in the tile and that have associated impact on another tile is less than or equal to a total quantity of events in the tile; and identifiers of other tiles associated with the event in the tile, for example, a tile ID 2 and a tile ID 3. In some possible embodiments, the data shown in FIG. 4 may further include identifiers of associated events in the other tiles associated with the event in the tile, for example, an event B1 and an event B3. The event A1 in the tile ID 1 is used as an example. It can be learned from FIG. 4 that the event A1 is associated with the tile ID 2 and the tile ID 3, the event A1 is associated with the event B1 in the tile ID 2, and the event A1 is associated with the event B3 in the tile ID 2.

It may be understood that for each tile, a mapping relationship between an event in the tile and another tile may be represented in the manner shown in FIG. 4, to complete generation of the tile-event index information.

### Second form: matrix structure

Specifically, any two tiles are used as a unit. When events in the two tiles have an association relationship, or geographic coverage of one of the two tiles includes geographic coverage of the other one of the two tiles, tile association information of the two tiles is generated. The tile association information of the two tiles is stored in a data structure in which identifiers of the two tiles are used as associated indexes.

For example, the two tiles may be the tile 1 and the tile 2, and tile association information of the tile 1 and the tile 2 indicates that an event in the tile 1 is associated with the tile 2, or indicates that an event in the tile 2 is associated with the tile 1.

In some possible embodiments, the tile association information of the tile 1 and the tile 2 further includes information indicating an identifier of an event in the tile 1, and an identifier of an event that is in the tile 2 and that is associated with the event in the tile 1. Alternatively, the tile association information of the tile 1 and the tile 2 further includes information indicating an identifier of an event in the tile 2, and an identifier of an event that is in the tile 1 and that is associated with the event in the tile 2.

FIG. 5 is a schematic diagram of a parameter matrix according to an embodiment of this application. A gray area in FIG. 5 is the parameter matrix. Numbers 1, 2, ..., and m are serial numbers of m tiles in tile-event index information. If a cell in the parameter matrix is not null, it indicates that two tiles corresponding to the cell are associated. Further, the cell may store identifiers of associated events in the two corresponding tiles. For example, T₂₁ indicates that an event in a tile 2 is associated with a tile 1, and T₁₂ indicates that an event in the tile 1 is associated with the tile 2. Because the parameter matrix mainly represents a correlation between different tiles, T₁₁, T₂₂, ..., Tₙₙ in the parameter matrix in FIG. 5 are set to null or 0.

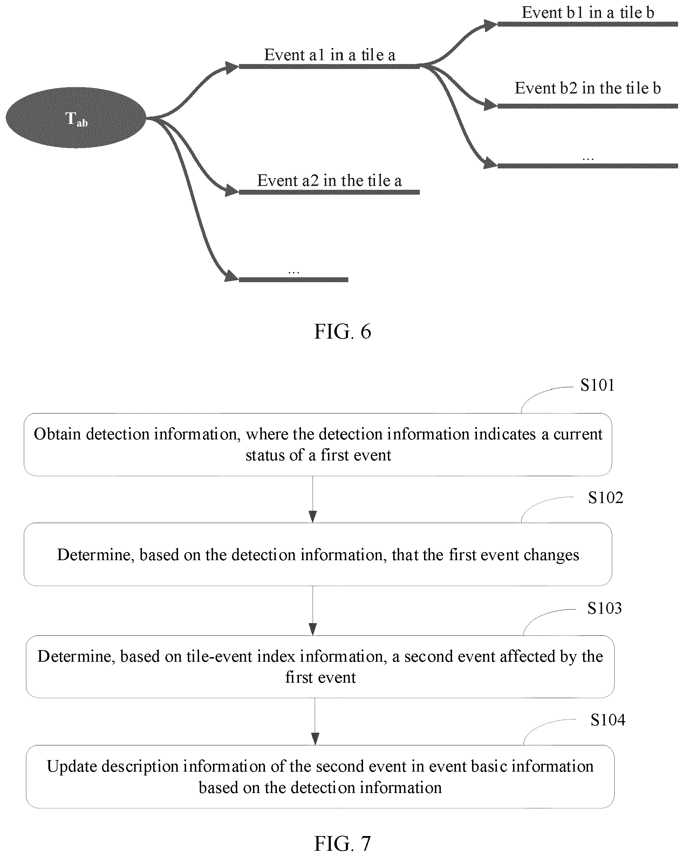

FIG. 6 is a schematic diagram of content of a non-null cell T_{ab} in FIG. 5 according to an embodiment of this application. T_{ab} indicates that an event in a tile a is associated with a tile b, and the content of T_{ab} specifically includes: events that are in the tile a and that are associated with the tile b, for example, an event a1 and an event a2, where a quantity of events that are in the tile a and that are associated with the tile b is less than or equal to a total quantity of events in the tile a; an identifier of the tile b; and associated events that are in the tile b and that are associated with the event in the tile a, for example, an event b1 and an event b2. The event a1 in the tile a is used as an example. It can be learned from FIG. 6 that the event a1 is associated with the tile b, the event a1 is associated with the event b1 in the tile b, and the event a1 is associated with the event b2 in the tile b.

In this embodiment of this application, a form of the parameter matrix shown in FIG. 5 is merely an example. It may be understood that the parameter matrix shown in FIG. 5 is a sparse matrix or a symmetric matrix. The sparse matrix means that the parameter matrix includes a plurality of "0"s. In this case, compression processing may be performed on the parameter matrix to reduce storage space occupied by the parameter matrix, to optimize the parameter matrix.

In embodiments of this application, geographic coverage of tiles in a map has different levels. For example, geographic coverage of a parent tile is greater than geographic coverage of a child tile. In addition, geographic ranges of different events in the map may also be different. For example, a geographic range of a weather-type event is usually greater than a geographic range of a traffic accident event. Therefore, an identifier of a tile in which an event is located, namely, an identifier of a tile that is uniquely bound to the event, may be determined based on a size of a geographic range of the event.

For example, a geographic range of a blizzard cold event A is large, and a tile ID of the blizzard cold event A may be a low-level tile ID, for example, a tile 1, in other words, the blizzard cold event A is an event in the tile 1. Therefore, the blizzard cold event A does not need to be bound to all four tiles, that is, a tile 1-00, a tile 1-01, a tile 1-10, and a tile 1-11, that are obtained by further slicing the tile 1. In this way, a representation structure of event basic information can be effectively simplified, and storage space can be saved.

In conclusion, after event basic information and tile-event index information are obtained based on the foregoing operations, and it is detected that an event changes, based on the tile-event index information, an identifier of a tile associated with the event can be quickly located, and an identifier of an event that is affected by the event and that is in the tile associated with the event can be quickly located, to implement an associated update on the tile and the event.

FIG. 7 is a flowchart of a map update method according to an embodiment of this application. The method is applied to a computing device or a terminal. Based on event basic information and tile-event index information, an associated update on a tile and an event in a map may be performed in quick response to a change of an event. The method includes but is not limited to the following steps.

S101: Obtain detection information, where the detection information indicates a current status of a first event.

In this embodiment of this application, the event basic information and the tile-event index information need to be first obtained. The event basic information includes description information of a plurality of events in the map, and description information of each event includes an event ID of the event and location data and attribute data of the event at at least one historical moment. The location data includes one or more of a geographic range of the event at the corresponding historical moment, an ID of a tile in which the event is located, a map element ID, and the like. The tile-event index information indicates an association relationship between an event in the map and a tile in the map. It should be noted that, for details of the event basic information and the tile-event index information, refer to related descriptions of the event basic information and the tile-event index information in the foregoing embodiment. Details are not described herein again.

In a specific implementation, the event basic information and the tile-event index information may alternatively be generated based on basic data sent by the data source device in FIG. 1. In another specific implementation, the event basic information and the tile-event index information may alternatively be obtained from another device (for example, a map server). In another specific implementation, the tile-event index information may alternatively be generated based on historical traffic data and expert experience. In this case, the tile-event index information not only includes an identifier of an event that has occurred at a current moment, but also includes an identifier of a future event that is predicted based on the historical data.

In this embodiment of this application, the detection information includes a geographic range and attribute data of the first event at the current moment. The first event may be an event that has been stored in the event basic information, or may be a newly added event (that is, an event that is temporarily not stored in the event basic information). This is not specifically limited in this embodiment of this application.

In this embodiment of this application, the detection information may be newly reported by the data source device at the current moment. For details of the data source device, refer to related descriptions of the data source device in FIG. 1. Details are not described herein again.

In another specific implementation, the detection information may be a status of an event in the event basic information at the current moment. For example, a change of an event 1 triggers prediction and an update on a status of an event 2 in the event basic information, and therefore a status of the event 2 at the current moment is obtained. In other words, the status of the event 2 at the current moment has changed compared with a status at a historical moment. Therefore, the status of the event 2 at the current moment also belongs to the detection information in this embodiment of this application.

S102: Determine, based on the detection information, that the first event changes.

In this embodiment of this application, determining, based on the detection information, that the first event changes includes any one of the following:
(1) determining, based on the detection information, that the first event is a newly added event;
(2) determining, based on the detection information, that the first event disappears; or
(3) determining, based on the detection information, that a change degree of the first event is greater than a preset threshold.

In this embodiment of this application, that the first event changes means that at least one of a geographic range and attribute data of the first event changes. That a change degree of the first event is greater than a preset threshold means that a change value of the geographic range of the first event at the current moment relative to a geographic range (stored in the event basic information) of the first event at a historical moment is greater than the preset threshold, and/or a change value of the attribute data of the first event at the current moment relative to attribute data (stored in the event basic information) of the first event at the historical moment is greater than the preset threshold.

In this embodiment of this application, when it is determined that credibility of the detection information is greater than a preset truth value, it is determined, based on the detection information, that the first event changes. A confidence of the detection information may be determined based on the detection information and the description information of each event in the event basic information. For example, the detection information indicates that the first event is a newly added traffic accident event A, and it is found, based on the event basic information, that there is a road freezing event B near a location of the traffic accident event A, so that credibility of the traffic accident event A may be increased.

S103: Determine, based on the tile-event index information, a second event affected by the first event.

In this embodiment of this application, when it is detected, based on the detection information, that the first event changes, an identifier of the first event and an identifier of a tile in which the first event is located are obtained from the detection information or description information of the first event in the event basic information, the first event may be quickly indexed in the tile-event index information based on the identifier of the first event and the identifier of the tile in which the first event is located, and a tile associated with the first event and an event in the tile associated with the first event are obtained from the tile-event index information. In this case, the second event affected by the first event is the event that is in the tile associated with the first event and that is obtained from the tile-event index information.

FIG. 4 is used as an example. It is assumed that the first event is an event A1, and it is determined, based on the detection information, that a change degree of the event A1 is greater than the preset threshold. In this case, content shown in FIG. 4 may be quickly located in the tile-event index information based on the event A1 and a tile ID 1 in which the event A1 is located, so that it is determined that the second event affected by the first event includes an event B1 and an event B3.

In this embodiment of this application, for example, that the first event affects the second event means that the first event may be a cause for occurrence of the second event, the first event increases or reduces a severity of the second event, the first event and the second event occur concomitantly, or a location of the first event is close to a location of the second event.

S104: Update description information of the second event in the event basic information based on the detection information.

In this embodiment of this application, because the second event is affected by the first event, when it is determined that the first event changes, the description information of the second event in the event basic information may be updated based on the detection information.

Specifically, updating the description information of the second event in the event basic information based on the detection information is: obtaining the description information of the second event from the event basic information; predicting a current status of the second event based on the detection information and the description information of the second event to obtain prediction information of the second event, where the prediction information of the second event includes a geographic range and attribute data of the second target event at the current moment; and finally adding the prediction information of the second event to the description information of the second event. In this way, an update on the description information of the second event is implemented.

In some possible embodiments, if the first event does not meet the foregoing three cases in S102, for example, a value of an attribute of the first event slightly changes, indicating that a change amplitude of the first event is small, the description information of the second event in the event basic information does not need to be updated.

In some possible embodiments, if it is determined in S102 that the first event disappears, in addition to performing S104, the description information of the first event may be further deleted from the event basic information.

In some possible embodiments, if it is determined in S102 that the first event is a newly added event, in addition to performing S104, the detection information may be further added to the event basic information as the description information of the first event.

In some possible embodiments, if it is determined in S102 that the change degree of the first event is greater than the preset threshold, in addition to performing S104, the detection information may be further added to the description information of the first event in the event basic information, to update the description information of the first event.

It should be noted that an update on an event may be transferred. For example, it is determined, based on the tile-event index information, that an event A is associated with an event B, and a change of the event A triggers an update on the event B, which is equivalent to that the event B changes. Updated description information of the event B may also be used as the detection information in S101. If the event B also meets the three cases in S102, an update on an event associated with the event B is triggered.

It can be learned that through implementation of this embodiment of this application, when a change of an event is detected, if change information of an event associated with the event is not reported in a timely manner, a latest status of the associated event can be effectively predicted, to implement an associated update on the event in the map, effectively reduce network transmission load, and improve event update efficiency.

The following describes the foregoing update process by using a specific scenario.

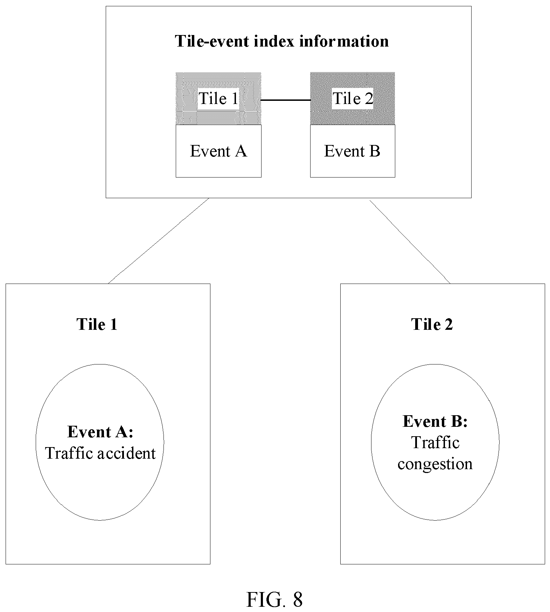

FIG. 8 is a schematic diagram of a scenario according to an embodiment of this application. As shown in FIG. 8, there is an event A (a traffic accident) in a tile 1, and there is an event B (traffic congestion) in a tile 2. Tile-event index information stores a mapping relationship between the tile 1 and the tile 2, and a mapping relationship between the event A in the tile 1 and the event B in the tile 2. It is assumed that when it is detected that a change degree of the event A in the tile 1 is greater than a preset threshold, it is found, based on the tile-event index information, that the event A is associated with the event B in the tile 2. In this case, an update on description information of the event B in the tile 2 is triggered.

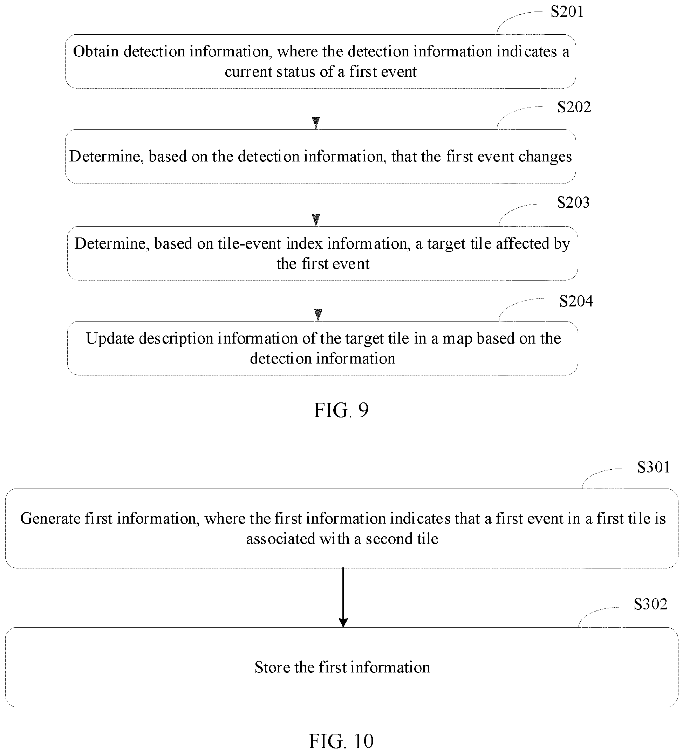

FIG. 9 is a flowchart of another map update method according to an embodiment of this application. The method is applied to a computing device or a terminal. FIG. 9 may be independent of the embodiment of FIG. 7, or may be a supplement to the embodiment of FIG. 7. The method includes but is not limited to the following steps.

S201: Obtain detection information, where the detection information indicates a current status of a first event. For details of this step, refer to related descriptions of S101 in the embodiment of FIG. 7. Details are not described herein again.

S202: Determine, based on the detection information, that the first event changes. For details of this step, refer to related descriptions of S102 in the embodiment of FIG. 7. Details are not described herein again.

S203: Determine, based on tile-event index information, a target tile affected by the first event.

In this embodiment of this application, after it is determined, based on the detection information, that the first event changes, an identifier of the first event and an identifier of a tile in which the first event is located are obtained from the detection information or description information of the first event in event basic information, the first event may be quickly located in the tile-event index information based on the identifier of the first event and the identifier of the tile in which the first event is located, and an identifier of a tile associated with the first event is obtained from the tile-event index information. In this way, it is determined that the target tile affected by the first event is the tile associated with the first event in the tile-event index information.

For example, in FIG. 4, it is assumed that the first event is an event A1, and it is determined, based on the detection information, that a change of the event A1 is any one of the following: The event A1 disappears; the event A1 is a newly added event; a change degree of the event A1 is greater than a preset threshold. In this case, content shown in FIG. 4 may be quickly located in the tile-event index information based on the eventA1 and a tile ID 1 in which the event A1 is located, so that it is determined that target tiles affected by the event A1 are a tile ID 2 and a tile ID 3.

In this embodiment of this application, the target tile is affected by the first event. In other words, the first event is associated with the target tile. Specifically, for example, a change of the first event affects a dynamic event in the target tile, geographic coverage of the tile in which the first event is located includes geographic coverage of the target tile, or geographic coverage of the target tile includes geographic coverage of the tile in which the first event is located.

S204: Update description information of the target tile in a map based on the detection information.

In this embodiment of this application, because the target tile is affected by the first event, when it is determined that the first event changes, the description information of the target tile in the map may be updated based on the detection information.

Specifically, when it is determined that the first event changes, an event that is associated with the first event and that is in the target tile affected by the first event may decrease or increase. Therefore, updating the description information of the target tile in the map based on the detection information is specifically: re-determining, based on the detection information and description information of each event in the target tile, a quantity of events that are associated with the first event and that are in the target tile and an identifier of the event associated with the first event.

For example, it is assumed that an event 1 in a tile 1 is associated with a tile 2. Specifically, the event 1 is associated with an event 3 and an event 4 in the tile 2. If it is determined, based on the detection information, that a change degree of the event 1 is greater than a preset threshold or the event 1 is a newly added event, it is re-determined, based on the detection information and description information of each event in all events in the tile 2, that the event 1 is associated with the event 3, the event 4, and an event 5 in the tile 2. Therefore, description information of the tile 2 in the map is updated, and updated description information of the tile 2 indicates that the event 3, the event 4, and the event 5 are separately associated with the event 1 in the tile 1.

In this embodiment of this application, when it is determined, based on the detection information, that the first event disappears, and duration in which the first event disappears meets preset duration, the updating the description information of the target tile in the map is: deleting the description information of the target tile in the map.

It can be learned that through implementation of this embodiment of this application, when an event in a tile changes, a tile that is in the map and that is associated with the changed event may be quickly indexed based on an association relationship between an event and a tile, so that an associated update on the tile associated with the changed event in the map may be implemented.

FIG. 10 shows another map generation method according to an embodiment of this application. The method described in FIG. 10 may be independent of the method embodiment shown in FIG. 7 or FIG. 9, or may be a supplement to the method shown in FIG. 7 or FIG. 9. The method includes but is not limited to the following steps.

S301: Generate first information, where the first information indicates that a first event in a first tile is associated with a second tile.

In this embodiment of this application, the first information is generated, where the first information indicates that the first event in the first tile is associated with the second tile, the first event is a dynamic event in a map, and the first tile and the second tile are two different tiles in the map.

In a specific implementation, that a first event is associated with a second tile is: a change of the first event affects a dynamic event in the second tile; geographic coverage of the second tile includes geographic coverage of the first tile; or geographic coverage of the first tile includes geographic coverage of the second tile.

In this embodiment of this application, for details of the tile, refer to related descriptions of the tile in the foregoing embodiment. Details are not described herein again.

In this embodiment of this application, the first event may be an existing event in the map, in other words, an event that has occurred and is still ongoing, or may be a new event.

It should be noted that, in FIG. 4, the first tile is a tile ID 1. If the first event is an event A1, the second tile may be a tile ID 2. In this case, the first information may indicate that the event A1 is associated with the tile ID 2. In this embodiment of this application, the first information may also be represented in the form shown in FIG. 6.

In a specific implementation, the first information includes information indicating an identifier of the first event, and information indicating an identifier of the second tile. FIG. 4 is used as an example. If the first event is an event A1, the second tile may be a tile ID 2 or a tile ID 3.

In a specific implementation, the first information further includes information indicating an identifier of a second event in the second tile, and the second event is affected by the change of the first event.

In this embodiment of this application, the second event is a dynamic event in the map, and that the second event is affected by the first event may be that occurrence of the second event is caused by the first event, the second event and the first event occur concomitantly, a location of the second event is close to a location of the first event, or the like.

FIG. 4 is used as an example. If the first event is an event A1, the second event may be an event B1 or an event B2.

In a specific implementation, the method further includes: obtaining second information, where the second information indicates a current status of the first event; determining, based on the second information, that the first event changes; determining, based on the first information, that first description information of the second event in the map needs to be updated; and updating the first description information based on the second information.

In this embodiment of this application, the second information may be newly reported by a data source device at a current moment. For the data source device, refer to related descriptions of the data source device in FIG. 1. Details are not described herein again. The second information may alternatively be description information that is of an event in the map at a current moment and that is obtained through update due to a change of an associated event.

In this embodiment of this application, the determining that the first event changes includes: determining that the first event disappears; determining that the first event is a new event; or determining that a change degree of the first event is greater than a preset threshold.

In the embodiment of FIG. 7, the second information is the detection information in S101.

In a specific implementation, the method further includes: obtaining third information, where the third information indicates the current status of the first event; determining, based on the third information, that the first event changes; determining, based on the first information, that second description information of the second tile in the map needs to be updated; and updating the second description information based on the third information.

In the embodiment of FIG. 9, the third information is the detection information in S201.

In a specific implementation, the method further includes updating the first information in the following case: the first event disappears; the first event changes; or the change degree of the first event is greater than the threshold.

The change degree of the first event is a change value of a geographic range of the first event at the current moment relative to a geographic range of the first event at a historical moment and/or a change value of attribute data of the first event at the current moment relative to attribute data of the first event at the historical moment.

In this embodiment of this application, the first event or the second event may be any one of the following: a blizzard cold event, a rainstorm event, a traffic accident event, a traffic congestion event, a road maintenance event, a road construction event, a road freezing event, a temporary speed limiting event, or a lane topology event.

S302: Store the first information.

In this embodiment of this application, the storing the first information is specifically: storing the first information in a data structure that is in the map and that is used to describe the first tile. It should be noted that the first information may be represented in the form shown in FIG. 4.

In this embodiment of this application, the storing the first information is specifically: storing the first information in a data structure in which an identifier of the first tile and the identifier of the second tile are used as associated indexes. It should be noted that the first information may be represented in the form shown in FIG. 5 and FIG. 6.

In some possible embodiments, the first information may be further sent, so that a receive end of the first information updates a tile in the map based on the first information. This is not specifically limited in this embodiment of this application.

It can be learned that through implementation of this embodiment of this application, map information including an association relationship between an event and another tile is generated, and a tile that is in the map and that is associated with an event can be quickly located based on the map information. This helps quickly respond to a change of the event, improve update efficiency of the event and the tile in the map, and reduce network transmission load.

An embodiment of this application further provides a map. The map includes map information, the map information indicates that a first event in a first tile is associated with a second tile, the first event is a dynamic event in the map, and the first tile and the second tile are two different tiles in the map.

In this embodiment of this application, that a first event is associated with a second tile is: a change of the first event affects a dynamic event in the second tile; geographic coverage of the second tile includes geographic coverage of the first tile; or geographic coverage of the first tile includes geographic coverage of the second tile.

In this embodiment of this application, the map information further includes information indicating an identifier of the first event, and information indicating an identifier of the second tile.

In this embodiment of this application, the map information further includes information indicating an identifier of a second event in the second tile, and the second event is affected by the change of the first event.

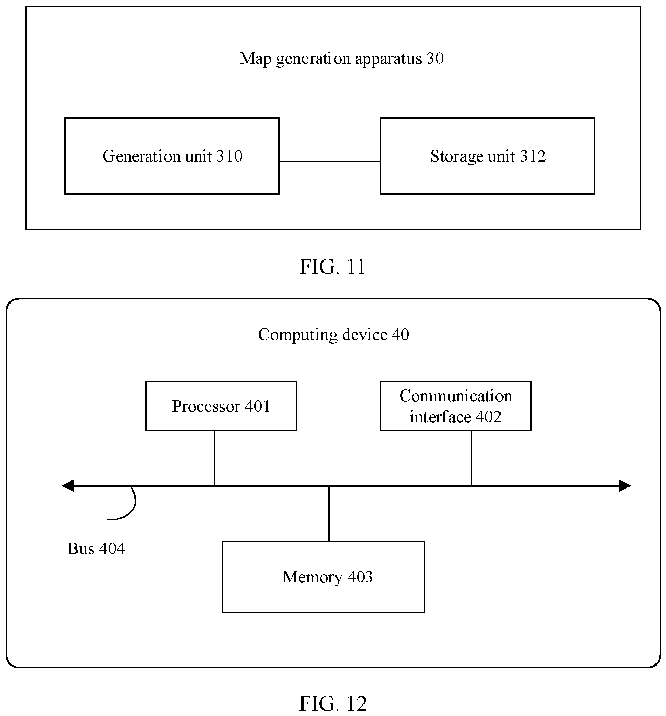

FIG. 11 is a schematic diagram of a function structure of an apparatus according to an embodiment of this application. A map generation apparatus 30 includes a generation unit 310 and a storage unit 312. The map generation apparatus 30 may be implemented by using hardware, software, or a combination of software and hardware. Details are provided below.

The generation unit 310 is configured to generate first information, where the first information indicates that a first event in a first tile is associated with a second tile, the first event is a dynamic event in a map, and the first tile and the second tile are two different tiles in the map. The storage unit 312 is configured to store the first information.

Functional modules of the map generation apparatus 30 may be further configured to implement the method described in the embodiment of FIG. 7. In the embodiment of FIG. 10, the generation unit 310 may be configured to perform S301, and the storage unit 312 may be configured to perform S302. The functional modules of the map generation apparatus 30 may be further configured to implement the methods described in the embodiments of FIG. 7 and FIG. 9. For brevity of this specification, details are not described herein again.

This application further provides a computing device. As shown in FIG. 12, the computing device 40 includes a processor 401, a communication interface 402, a memory 403, and a bus 404. The processor 401, the memory 403, and the communication interface 402 communicate with each other through the bus 404. The computing device 40 may be a server or a computing device. It should be understood that a quantity of processors and a quantity of memories in the computing device 40 are not limited in this application.

The bus 404 may be a peripheral component interconnect (peripheral component interconnect, PCI) bus or an extended industry standard architecture (extended industry standard architecture, EISA) bus, or the like. Buses may be classified into an address bus, a data bus, a control bus, and the like. For ease of representation, the bus is represented by using only one line in FIG. 12. However, it does not mean that there is only one bus or only one type of bus. The bus 404 may include a path for transmitting information between components (for example, the memory 403, the processor 401, and the communication interface 402) of the computing device 40.

The processor 401 may include any one or more of processors such as a central processing unit (central processing unit, CPU), a microprocessor (micro processor, MP), and a digital signal processor (digital signal processor, DSP).

The memory 403 is configured to provide storage space. The storage space may store data such as an operating system and a computer program. The memory 403 may be one of or a combination of a plurality of a random access memory (random access memory, RAM), an erasable programmable read-only memory (erasable programmable read-only memory, EPROM), a read-only memory (read-only memory, ROM), a portable read-only memory (compact disc read-only memory, CD-ROM), and the like. The memory 403 may exist independently, or may be integrated into the processor 401.

The communication interface 402 may be configured to provide information input or output for the processor 401. Alternatively, the communication interface 402 may be configured to receive data sent from the outside and/or send data to the outside, and may be a wired link interface such as an Ethernet cable, or may be a wireless link (such as Wi-Fi, Bluetooth, universal wireless transmission, or a vehicle-mounted short-distance communication technology) interface. Alternatively, the communication interface 402 may further include a transmitter (for example, a radio frequency transmitter or an antenna), a receiver, or the like coupled to the interface.

The processor 401 in the computing device 40 is configured to read the computer program stored in the memory 403, and is configured to perform the foregoing map generation method and map update method, for example, the method described in FIG. 7, FIG. 9, or FIG. 10.

In a possible design, the computing device 40 may be one or more modules in the computing device or the terminal that performs the method shown in FIG. 7, FIG. 9, or FIG. 10. The processor 401 may be configured to read one or more computer programs stored in the memory, to perform the following operations:
generating first information, where the first information indicates that a first event in a first tile is associated with a second tile, the first event is a dynamic event in a map, and the first tile and the second tile are two different tiles in the map; and
storing the first information through the storage unit 312.

In the foregoing embodiments in this specification, descriptions of the embodiments have respective focuses. For a part that is not described in detail in an embodiment, refer to related descriptions in another embodiment.

It should be noted that a person of ordinary skill in the art may know that all or some of the steps of the methods in the foregoing embodiments may be implemented by a program instructing related hardware. The program may be stored in a computer-readable storage medium. The storage medium includes a read-only memory (Read-Only Memory, ROM), a random access memory (Random Access Memory, RAM), a programmable read-only memory (Programmable Read-only Memory, PROM), an erasable programmable read-only memory (Erasable Programmable Read-Only Memory, EPROM), a one-time programmable read-only memory (One-time Programmable Read-Only Memory, OTPROM), an electrically erasable programmable read-only memory (Electrically Erasable Programmable Read-Only Memory, EEPROM), a compact disc read-only memory (Compact Disc Read-Only Memory, CD-ROM) or another optical disc memory, a magnetic disk memory, a magnetic tape memory, or any other computer-readable medium used to carry or store data.

The technical solutions of this application essentially, or the part contributing to the current technology, or all or some of the technical solutions may be implemented in a form of a software product. The computer program product is stored in a storage medium and includes several instructions for instructing a device (which may be a personal computer, a server, a network device, a robot, a single-chip microcomputer, a chip, or the like) to perform all or some of the steps of the methods described in embodiments of this application.

## Claims

1. A map generation method, wherein the method comprises:
generating first information, wherein the first information indicates that a first event in a first tile is associated with a second tile, the first event is a dynamic event in a map, and the first tile and the second tile are two different tiles in the map; and
storing the first information.

2. The method according to claim 1, wherein that a first event is associated with a second tile is:
a change of the first event affects a dynamic event in the second tile;
geographic coverage of the second tile comprises geographic coverage of the first tile; or
geographic coverage of the first tile comprises geographic coverage of the second tile.

3. The method according to claim 1 or 2, wherein the first information comprises information indicating an identifier of the first event, and information indicating an identifier of the second tile.

4. The method according to any one of claims 1 to 3, wherein the first information further comprises information indicating an identifier of a second event in the second tile, and the second event is affected by the change of the first event.

5. The method according to claim 4, wherein the method further comprises:
obtaining second information, wherein the second information indicates a current status of the first event;
determining, based on the second information, that the first event changes;
determining, based on the first information, that first description information of the second event in the map needs to be updated; and
updating the first description information based on the second information.

6. The method according to any one of claims 1 to 5, wherein the method further comprises:
obtaining third information, wherein the third information indicates the current status of the first event;
determining, based on the third information, that the first event changes;
determining, based on the first information, that second description information of the second tile in the map needs to be updated; and
updating the second description information based on the third information.

7. The method according to any one of claims 1 to 6, wherein the method further comprises: updating the first information in the following case:
the first event disappears;
the first event changes; or
a change degree of the first event is greater than a preset threshold.

8. The method according to any one of claims 1 to 7, wherein the storing the first information comprises:
storing the first information in a data structure that is in the map and that is used to describe the first tile.

9. The method according to any one of claims 1 to 7, wherein the storing the first information comprises:
storing the first information in a data structure in which an identifier of the first tile and the identifier of the second tile are used as associated indexes.

10. A map generation apparatus, wherein the apparatus comprises:
a generation unit, configured to generate first information, wherein the first information indicates that a first event in a first tile is associated with a second tile, the first event is a dynamic event in a map, and the first tile and the second tile are two different tiles in the map; and
a storage unit, configured to store the first information.

11. The apparatus according to claim 10, wherein that a first event is associated with a second tile is:
a change of the first event affects a dynamic event in the second tile;
geographic coverage of the second tile comprises geographic coverage of the first tile; or
geographic coverage of the first tile comprises geographic coverage of the second tile.

12. The apparatus according to claim 10 or 11, wherein the first information comprises information indicating an identifier of the first event, and information indicating an identifier of the second tile.

13. The apparatus according to any one of claims 10 to 12, wherein the first information further comprises information indicating an identifier of a second event in the second tile, and the second event is affected by the change of the first event.

14. The apparatus according to claim 13, wherein the apparatus further comprises:
an obtaining unit, configured to obtain second information, wherein the second information indicates a current status of the first event;
a determining unit, configured to determine, based on the second information, that the first event changes, wherein
the determining unit is further configured to determine, based on the first information, that first description information of the second event in the map needs to be updated; and
an update unit, configured to update the first description information based on the second information.

15. The apparatus according to any one of claims 10 to 14, wherein the apparatus further comprises:
the obtaining unit, configured to obtain third information, wherein the third information indicates the current status of the first event;
the determining unit, configured to determine, based on the third information, that the first event changes, wherein
the determining unit is further configured to determine, based on the first information, that second description information of the second tile in the map needs to be updated; and
the update unit, configured to update the second description information based on the third information.

16. The apparatus according to any one of claims 10 to 15, wherein the update unit is further configured to update the first information in the following case:
the first event disappears;
the first event changes; or
a change degree of the first event is greater than a preset threshold.

17. A map generation apparatus, wherein the apparatus comprises a memory and a processor, the memory stores computer program instructions, and the processor runs the computer program instructions, to enable the apparatus to perform the method according to any one of claims 1 to 9.

18. A computer-readable storage medium, comprising computer instructions, wherein when the computer instructions are run by a processor, the method according to any one of claims 1 to 9 is implemented.

19. A map, wherein the map comprises map information, the map information indicates that a first event in a first tile is associated with a second tile, the first event is a dynamic event in the map, and the first tile and the second tile are two different tiles in the map.

20. The map according to claim 19, wherein that a first event is associated with a second tile is:
a change of the first event affects a dynamic event in the second tile;
geographic coverage of the second tile comprises geographic coverage of the first tile; or
geographic coverage of the first tile comprises geographic coverage of the second tile.

21. The map according to claim 19 or 20, wherein the map information comprises information indicating an identifier of the first event, and information indicating an identifier of the second tile.

22. The map according to any one of claims 19 to 21, wherein the map information further comprises information indicating an identifier of a second event in the second tile, and the second event is affected by the change of the first event.

23. A computer-readable storage medium, wherein the computer-readable storage medium stores the map according to any one of claims 19 to 22.

24. A computer program product, comprising computer instructions, wherein when the computer instructions are run on a processor, the method according to any one of claims 1 to 9 is implemented.
